(19) Europäisches Patentamt
European Patent Office
Office européen des brevets

(11) EP 0 945 606 A2

(12) EUROPEAN PATENT APPLICATION

(43) Date of publication:
29.09.1999 Bulletin 1999/39

(51) Int Cl.6: **F02B 75/02**, F02B 41/04

(21) Application number: 99302332.4

(22) Date of filing: 25.03.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 27.03.1998 JP 9819398
27.03.1998 JP 9819498
27.03.1998 JP 9819598

(71) Applicant: **ISUZU CERAMICS RESEARCH INSTITUTE CO., LTD.**
**Fujisawa-shi, Kanagawa-ken (JP)**

(72) Inventors:
• Kawamura, Hideko
**Kouza-gun, Kanagawa-ken 253-0105 (JP)**
• **Higashino, Akira, Hoshi no Oka View City C-421**
**Yokohama-shi, Kanagawa-ken 240-0044 (JP)**

(74) Representative: **Jenkins, Peter David et al**
**PAGE WHITE & FARRER**
**54 Doughty Street**
**London WC1N 2LS (GB)**

(54) **Turbocharged gas-combustion engine equipped with motor generator**

(57)     Disclosed a gas-combustion engine burning fuel of natural gas, which is provided with a turbocharger (15) having a motor generator(18) and operated on the Miller cycle that may control adequately actual compression ratios by regulating the timing for opening and closing intake valves(11). The gas-combustion engine has intake-valve lift controllers(30) for altering the timing for opening and closing intake valves(11) at intake ports (7,9) to thereby vary actual compression ratios. The intake-valve lift controllers(30) each, when the temperatures of the intake air and/or the combustion chamber walls are below a design temperature preselected, control the timing for closure of the associated intake valve (11) so as to block the associated intake port(7,9) near the bottom dead center of the compression phase. In contrast, when the temperature of the combustion chamber walls is above the design temperature preselected, the intake-valve lift controllers(30) each delay the timing for closure of the intake valve(11) at the intake port(7,9) so as to permit a part of the intake air to flow backwards to the intake port(7,9). In a design of two intake valves (11) being provided per each combustion chamber(1,2), the intake-valve lift controllers(30) may operate so as to alter the duration for opening any one of the two intake valves. A controller unit(50) regulates the timings for opening and closure of the intake valves (11), in response to combustion chamber wall temperatures, boosting pressures, engine power and fuel flow rates supplied into the sub-combustion chambers(2), operating conditions of a motor generator(18) in a turbocharger(15) and the intake-valve lift controllers (30).

*FIG. 1*

## Description

The present invention relates to a gas-combustion engine operative on the Miller cycle, which is provided with sub-combustion chambers in which gas fuel injected ignites and burns, and also has a turbocharger provided with a motor generator driven by exhaust gases.

A gas-combustion engine employing natural gas as main fuel has been conventionally researched and developed for the use of cogeneration systems and vehicles. Most cogeneration systems may produce power of electric energy by an electric generator and then heat water with the remaining energy in the exhaust gases passing through a heat exchanger to thereby provide hot water for such applications as heating buildings. Japanese Patent Laid-Open No. 33785/1994 is a gas-combustion engine of the type suitable for the purpose described just above. In the cited gas-combustion engine having sub-combustion chambers, the gas fuel is injected or sprayed into the sub-combustion chambers while the compressed hot air is charged into the sub-combustion chambers from main combustion chambers by opening control valves near the top dead center of the compression phase to thereby produce the combustible air-gas fuel mixture that almost instantaneously ignites and burns.

In most gas-combustion engines for the conventional cogeneration system, the exhaust gases pass through turbocharger, energy recovery means and steam generators, thereby lowering in temperature. The low-temperature exhaust gases may be used in the exhaust gas recirculating system to diminish the emission of NOx. The exhaust gases expelled from the heat-insulating gas-combustion engine drive the turbocharger and then operate the energy recovery means having electric generators. The gas-combustion engine further charges the low-temperature exhaust gases from the energy recovery means into the heat exchangers in the steam generators where water is converted to steam that passes through steam turbines to produce power of electricity. An exemplary gas-combustion engine of such prior type as described above is shown in Japanese Patent Laid-Open No. 108865/1994.

Meanwhile, in most gas-combustion engines having the sub-combustion chambers, the gas fuel is injected or sprayed into the sub-combustion chambers during the intake phase and a first portion of the compression phase of the cycle while the compressed hot air is charged into the sub-combustion chambers from the main combustion chambers by opening control valves during from a latter portion to the end of the compression phase in the cycle to thereby produce the combustible air-gas fuel mixture that almost instantaneously ignites and burns. In such design, the natural gas injected into the sub-combustion chambers is usually made to activate with heat transfer by exposing the sub-chamber walls. This makes the compressed hot air easier to ignite and, therefore, the combustion may prematurely initiate no later than the sufficient induction of the compressed air into the sub-combustion chambers according to circumstances of the compressed air that is admitted into the sub-combustion chambers by opening the control valves. That is to say, since the compressed natural gas, unlike liquid fuel such as kerosene, is a kind of gaseous fuel, it has no need of the event where the liquid fuel vaporizes into decomposition and consequently there is no need of the advanced time for ignition delay that should be required in the liquid fuel. This becomes a major pre-ignition problem in which the natural gas fuel ignites almost instantaneously of coming into contact with the compressed hot air so that the combustion initiates no later than the accomplishment of the substantially homogeneous mixing of the natural gas in air whereby the premature burning may happens only near the communication ports between the sub- and main combustion chambers, resulting in the occurrence of combustion knock with the pressure impulses, which causes the heterogeneous heat transfer to the combustion chambers that will be thus damaged.

Moreover, in order to admit the compressed air from the main combustion chambers to the sub-combustion chamber and mix the fuel with the admitted air to the homogeneousness required to thorough burning of the injected gas fuel, it takes about from 0.1 to 0.2 ms just before the initiation of combustion in the sub-combustion chambers. In addition, as the reliable ignition or burning of natural gas can not be ensured in case where the control valves at the main chambers or the communication ports are low in temperature, the gas-combustion engines are typically constructed with somewhat higher compression ratios. As being well known, the higher the compression ratio is, the higher the thermal efficiency becomes in proportion to the compression ratio and therefore the higher compression ratio is preferable. Nevertheless increased compression ratio results in increasing the tendency for abnormal combustion or combustion knock. It is thus critical for the performance of the gas-combustion engines to find the compression ratio where the thermal efficiency may rise while the combustion knock may be eliminated.

In burning the gas fuel on Diesel cycle at the higher compression ratio in the gas-combustion engines, the critical factors to be taken into consideration are the difference in heat value or calorific power, the required amount of air and the magnitude of compression ratio. It has been already found that the heat value of natural gas is 11,200kcal per kg (cf. the heat value of kerosene is 10,170kcal per kg) and the theoretical air-fuel ratio of natural gas is 13.2 (cf. the theoretical air-fuel ratio of kerosene is 14.1. Consequently the amount of air required burning the natural gas having the heat value equivalent with kerosene of 1 kg is given by the formula;

$$(10170/11200) \times (13.2 / 14.1) = 0.85.$$

It means that the required amount of air for burning natural gas may be necessary about 85% compared with kerosene.

For the satisfaction of the conditions described just above, the gas-combustion engines preferably operate on the Miller cycle wherein the amount of air admitted in the cylinder may be made reduced while the expansion ratio increases. When considering the gas-combustion engines operating on the miller cycle in which the intake valves are operated with an appreciate lag in timing, a major problem arises as to the boosting pressure must be intensified to what extent sufficient to compensate the lack of the amount of intake air.

Most conventional turbochargers usually employ compressors operated by the exhaust gases to feed the intake air into the combustion chambers. However because the compressors are not variable in rotational frequencies so as to control the boosting pressure, the turbocharger has no boosting pressure that is to control the engine operating conditions. In addition, operating the compressor in the turbocharger by the exhaust gases results in suffering in friction loss in the driving power for the compressors. This causes another problem in which the improvement in the cycle efficiency is disadvantageously consumed owing to the friction in the compressors.

In accordance with the conception of the present inventors for controlling the boosting pressure, the driving energy for the turbocharger is recovered from the exhaust gases under normal operating conditions, whereas in case if the exhaust-gas energy is too small to operate the turbocharger, the energy for operating the compressor in the turbocharger may be supplied with the electric power that is stored in batteries equipped in the engine, or the stored electric power that is derived from the generator on the engine power-take-off shaft or the motor generator on the turbocharger driven under the normal operating conditions.

The present invention has for its primary object to overcome the problems as described above and more particular provide a gas-combustion engine that operates on the Miller cycle so as to make satisfy the operating condition as to the heat values, the required amounts of air and the compression ratios.

In one aspect of the present invention, with taking consideration of the higher compression ratios causing the occurrence of combustion knock in the combustion chambers, a method is disclosed of preventing the occurrence of combustion knock by making the intake air flow backwards to the intake ports during a first half portion of the compression phase to reduce the compression ratios thereby lowering the maximum pressure at the end of the compression phase to the pressure level where no premature burning happens only near the communication ports almost instantaneously of opening the control valves, whereby the sufficient amount of intake air is allowed to flow in the sub-combustion chambers so that the combustion knock may be eliminated.

In another aspect of the present invention, a gas-combustion engine is disclosed wherein the timing for closure of the intake valve is advanced at the low-temperature event of the intake air or the combustion chamber walls while the timing for closure of the intake valve is delayed at the high-temperature event of the combustion chamber walls, whereby the compressed natural gas may certainly ignite and burn just before the top dead center of the compression phase, i.e., at about 5 ° of the crank angle.

In another aspect of the present invention, a gas-combustion engine is disclosed wherein the amount of air induced into the combustion chambers may be kept from the reduction even under the event where the timing for closure of the intake valve is delayed. In accordance with the present invention, the boosting pressure for compensating the lack of the amount of intake air may be intensified by the turbocharger. Moreover, at idling or low-load engine condition during which the combustion is unstable, the boosting pressures may be also enhanced by the turbocharger that is driven by the motor operation of the motor generator.

The present invention is concerned with a gas-combustion engine comprising combustion chamber members arranged in a cylinder head and provided with main combustion chambers and sub-combustion chambers that are communicated with the main combustion chambers through communicating ports, intake ports and exhaust ports formed in the combustion chamber members and the cylinder head so as to open to the main combustion chambers, intake valves for opening and closing the intake ports, exhaust valves for opening and closing the exhaust ports, control valves disposed at the communicating ports to open and close the communicating ports, fuel supply means for charging compressed natural gas into the sub-combustion chambers, a turbocharger provided with a motor generator that is arranged in exhaust pipes connected to the exhaust ports, and intake-valve lift controllers each for altering a timing for opening and closure of its associated intake valve at the associated intake port, whereby the intake-valve lift controllers each alter the timing for closure of its associated intake valve to thereby vary actual compression ratios while the motor generator operates to actuate the turbocharger so as to control boosting pressures of intake air.

In another aspect of the present invention, when the temperatures of the intake air and/or the combustion chamber walls are below a design level of preselected temperature, the intake-valve lift controllers each control its associated intake valve at the associated intake port so as to advance the timing for closure of the intake valve to thereby block the intake port near the bottom dead center of the compression phase. In contrast, when the temperature of the combustion chamber walls is above the design level of preselected temperature, the timing for closure of the intake valve at the intake port is controlled so as to be delayed to thereby permit a part of the intake air to flow backwards to the intake port.

In another aspect of the present invention, when the intake-valve lift controllers have delayed the timing for closure of the intake valves at the intake ports, the motor generator is controlled so as to operate the turbocharger that intensifies the boosting pressure.

In a further another aspect of the present invention, on part-load engine operation during which combustion is unstable, the motor generator provided in the turbocharger is controlled so as to operate as the motor for enhancing the boosting pressure.

In another aspect of the present invention, the motor generator is composed of a rotor of permanent magnet mounted on a shaft of the turbocharger, and a stator arranged confronting the rotor. In addition, the motor generator operates as the motor on batteries or a generator that is mounted on an engine power-take-off shaft.

In another aspect of the present invention, the combustion chamber members are each formed with the main combustion chamber, the sub-combustion chamber, the communicating port for opening the main combustion chamber to the sub-combustion chamber, the intake port provided with a valve seat against which is seated the intake valve, the exhaust port provided with a valve seat against which is seated the exhaust valve, and a fuel ingress port opened to the sub-combustion chamber to charge the compressed natural gas into the sub-combustion chamber. Moreover, the combustion chamber members are made of ceramics and covered with heat-insulating layers so as to be formed in heat-insulating structures.

The gas-combustion engine of the present invention is constructed, as described above, such that the timing for opening and closing the intake valves may be controlled dependently on the temperature conditions of the intake air and combustion chamber walls. Sufficient amount of intake air may be therefore induced in the sub-combustion chambers in spite of the temperature conditions, whereby the gaseous fuel may certainly ignite and burn just before the top dead center of the compression phase, i.e., at about 5 ° of the crank angle. In order to the pressure difference at the end of the compression phase, it is preferred to open slightly the control valves on a latter half portion of the compression phase so as to permit the initiation of intake-air admission into the sub-combustion chambers in which the intake air begins to mix with the fuel, and then fully open the control valves near the top dead center of the compression phase whereby the through combustion is achieved in the sub-combustion chambers.

In the gas-combustion engine of the present invention, as the maximum pressure at the end of the compression phase is reduced with the result of lowering the compression ratio, even if the gaseous fuel is activated in the sub-combustion chambers owing to the high temperature of the combustion chamber walls, no premature initiation of combustion happens instantaneously with inflow of compressed intake air into the sub-combustion chambers prior to the admission of the desired amount of air, resulting in preventing the occurrence of combustion knock. Moreover, the adequate amount of inflow air into the sub-combustion chambers results in restraining the discharge of hydrocarbons(HC) and soot, and the adequate compression ratios results in the achievement of desired thermal efficiency.

According to the gas-combustion engine of the present invention as described above, the actual compression ratios may be regulated by altering the timing for opening and closing the intake valves, depending on the temperature conditions of the intake air and combustion chamber walls. Moreover, upon delaying the timing for closure of the intake valves, the turbocharger is actuated to help ensure the adequate amount of intake air to be admitted into the main combustion chambers. In contrast, on part-load engine operation during which combustion is unstable, the motor generator provided in the turbocharger operates as the motor for intensifying the intake air pressures. In either case, the adequate amount if intake air may be constantly supplied into the main combustion chambers and also the actual compression ratio may be always kept at the preferred level, whereby the thermal efficiency may be improved. Besides, the actual compression ratio may be reliably provided at the adequate level irrespective of the temperature conditions of the intake air as well as the combustion chamber walls so that the sub-combustion chambers are supplied with sufficient amount of intake air from the main combustion chambers. As a result, no higher compression ratio occurs that might otherwise cause the combustion knock and also the desirable ignition or burning may take place in the sub-combustion chambers thereby diminishing the emission of hydrocarbons(HC) and soot.

In one aspect of the present invention, the gas-combustion engine is disclosed wherein the combustion chamber members are each formed with two intake ports in which are provided the intake valves for opening and blocking the intake ports, one to each port, and the intake valve lift controllers each alter a duration for opening at least one of its associated two intake ports to thereby vary the amount of intake air.

In another aspect of the present invention, the gas-combustion engine is disclosed wherein the intake-valve lift controllers each operate so as to make the duration for opening any one of its associated two intake valves differ from that of the other intake valve, thereby controlling the amount of intake air admitted in the associated main combustion chamber.

In another aspect of the present invention, during startup and warm-up just after the startup of the engine, the intake valves are controlled so as to make their valve-open lifts smaller compared with their normal lifts to thereby elevate compression ratios, and after warm-up the intake valve lift controllers are controlled so as to return the shortened valve-open lifts to the normal lifts to thereby diminish actual compression ratios.

In a further another aspect of the present invention, when the intake valve lift controllers have returned the shortened valve-open lifts to the normal lifts, the turbocharger is controlled so as to intensify the boosting pressure.

In one aspect of the present invention, the gas-combustion engine is disclosed wherein on part-load engine operation during which combustion is unstable, the motor generator provided in the turbocharger is controlled so as to operate as the motor for enhancing the boosting pressure.

In another aspect of the present invention, the intake-valve lift controllers are each comprised of a hydraulic cylinder unit expansible in response to ingression and egression of hydraulic fluid to a fluid chamber that is incorporated in a valve mechanism of the associated intake valve, and the hydraulic cylinder is regulated in hydraulic pressure therein to thereby control the lift of the intake valve. In addition, the hydraulic cylinder units are each disposed between a valve holder mounted to a valve stem of the associated intake valve and any one of a cam and a rocker arm oscillated by the action of the cam.

In the gas-combustion engine constructed as described above, during startup and warm-up in which the temperature is relatively low, the intake-valve lift controllers operate so as to make the lift of any one of the intake valves smaller with the elevation of the compression ratios to thereby help ensure reliable ignition. In contrast, after warm-up the intake valve lift controllers are controlled so as to return the shortened valve-open lifts to the normal lifts to thereby diminish actual compression ratios. At this time, the turbocharger operates to elevate the boosting pressures accompanied with the increase of the amount of intake air thereby ensuring the desired amount of intake air to be admitted into the sub-combustion chambers. On low-load engine condition during which the combustion is unstable and therefore no pressure may be boosted with the turbocharger, the pressures of the intake air may be intensified by the compressor of the turbocharger, which is driven by the motor operation of the motor generator.

In one aspect of the present invention, the gas-combustion engine is disclosed that includes temperature sensors for monitoring temperatures of the combustion chamber walls of the combustion chambers, pressure sensors monitoring the boosting pressures in intake air admitted into the combustion chambers through intake pipes connected to the intake ports, other sensors for monitoring engine power and ignition of the fuel charged into the sub-combustion chambers, and a controller unit for regulating, in response to detected signals issued from the sensors, fuel flow rates supplied by the fuel supply means, the boosting pressures undergoing changes in accordance with the operating conditions of the motor generator of the turbocharger, and the timing for opening and closure of the intake valves through the intake-valve lift controllers.

In another aspect of the present invention, the controller unit, when the boosting pressure is below a preselected value, controls the motor generator so as to operate as the motor thereby enhancing the boosting pressure. Moreover, the controller unit, when the temperature of the combustion chamber walls is below a preselected value, controls the motor generator so as to operate as the motor thereby enhancing the boosting pressure.

In a further aspect of the present invention, the controller unit, when the engine power is below a preselected value, controls so as to increase the fuel flow rates supplied from the fuel supply means. In addition, the controller unit, when the engine power is above a preselected value, controls the motor generator so as to operate as the generator thereby generating electric power.

In another aspect of the present invention, the controller unit, when ignition failure is detected, controls the motor generator so as to operate as the motor thereby enhancing the boosting pressure. An ignition sensor constructed likewise with the combustion knock sensor that is susceptive to the vibration may detect the ignition of the fuel.

In another aspect of the present invention, the intake-valve lift controllers each, when the temperature of the combustion chamber walls is below a design temperature preselected, advance the timing for closure of the associated intake valve so as to block the associated intake port near the bottom dead center of the compression phase, and when the temperature of the combustion chamber walls is above the design temperature preselected, delay the timing for closure of the intake valve at the intake port so as to permit a part of the intake air to flow backwards to the intake port.

In a further aspect of the present invention, when the intake-valve lift controllers have delayed the timing for closure of the intake valves at the intake ports, the turbocharger is controlled so as to intensify the pressures in the intake air.

In another aspect of the present invention, the gas-combustion engine is disclosed wherein the intake pipes are each provided with a heat exchanger for cooling the intake air. The heat exchanger is composed of porous members of ceramics or metals superior in thermal conductivity such as aluminum or the like, the porous members being arranged both in the exhaust pipes and around the periphery of the exhaust pipes. It is preferred that the porous members in the exhaust pipes are designed so as to have no adverse effect on the boosting pressures. That is to say, the intake air admitted in the combustion chambers, although heated once in the combustion chambers, may be made to flow backwards to the intake ports where the hot air is cooled down. As the backward flow is cooled, the interiors of the combustion chambers are also cooled down so that the whole intake system may be cooled with the result of improvement in volumetric efficiency.

For helping ensure the reliable ignition, preventing the occurrence of combustion knock, reducing the emission of hydrocarbons, soot or the like and also improving the thermal efficiency in the gas-combustion engine constructed as described above, considering the pressure at the end of the compression phase undergoes a change in accordance with the magnitude of the boosting pressure, it should be most preferred to keep the magnitude of the boosting pressures at the adequate pressure level by controlling the fuel flow rates injected into the sub-combustion chambers and the operating conditions of the compressor driven with the motor generator in the turbocharger in response to the detected values of temperatures of the combustion chamber walls, boosting pressures, engine power and the like.

The gas-combustion engine of the present invention, as described above, regulates the intake-valve lift controllers, the amount of injected fuel per cycle, and the operation of the motor generator in the turbocharger, in accordance with the detected conditions on the temperatures of the combustion chamber walls, the boosting pressures, the engine power and ignitions of the fuel. Hence both the amounts of injected fuel and the boosting pressures may be held in the desirable levels so that, in spite of the temperature conditions of the combustion chamber walls, the sufficient amount of air may be admitted into the sub-combustion chambers from the main combustion chambers near the top dead center of the compression phase and the gaseous fuel may reliably ignite just before the top dead center, i.e., at about 5° of the crank angle, of the compression phase. For example, even if thetemperatures of the combustion chamber walls are as high as the fuel is activated in the sub-combustion chambers, the compressed intake air charged into the sub-combustion chambers, as being reduced in compression ratio, does not prematurely ignite or initiate combustion no later than the sub-combustion chambers are supplied with the desired amount of air. This results in preventing the occurrence of combustion knock. Moreover, the adequate amount of inflow air into the sub-combustion chambers restrains the discharge of hydrocarbons(HC) and soot, and the adequate compression ratios results in the achievement of desired thermal efficiency. It is of course that the pressures at the end of the compression phase may shift in accordance with the magnitude of the boosting pressures.

Other aims and features of the present invention will be more apparent to those skilled in the art on consideration of the accompanying drawings and following specification wherein are disclosed preferred embodiments of the invention with the understanding that such variations, modifications and elimination of parts may be made therein as fall within the scope of - the appended claims without departing from the scope of the invention.

FIG. 1 is a fragmentary sectional view showing a preferred embodiment of a gas-combustion engine according to the present invention:
FIG. 2 is a schematic explanatory view a turbocharger arranged in an exhaust line of the gas-combustion engine in FIG. 1 and provided with a motor generator:
FIG. 3 is a diagram illustrating operating timings of an intake valve, exhaust valve, control valve and fuel valve in the gas-combustion engine according to the present invention:
FIG. 4 is a graphical representation showing exemplary relations of pressure versus volume on the Miller cycle of the gas-combustion engine in FIG. 1:
FIG. 5 is a schematic explanatory view showing an intake-valve lift control incorporated in the gas-combustion engine shown in FIG. 1:
FIG. 6 is a graphical representation showing another exemplary relations of pressure versus volume of the gas-combustion engine:
FIG. 7 is a fragmentary sectional view showing another embodiment of a gas-combustion engine in accordance with the present invention:
FIG. 8 is a processing flowchart illustrating an operational control in the gas-combustion engine shown in FIG.7: and
FIG. 9 is a processing flowchart subsequent to the flowchart of FIG.8.

The gas-combustion engine according to the present invention will be in detail explained below with reference to the accompanying drawings. The present invention is directed to a gas-combustion engine having sub-combustion chambers and employing fuel of natural gas containing the essential component of $CH_4$. The gas-combustion engine of the present invention may be also of any one of a single-cylinder type and multicylinder type, which may be adapted for, for example, cogeneration systems and automobiles.

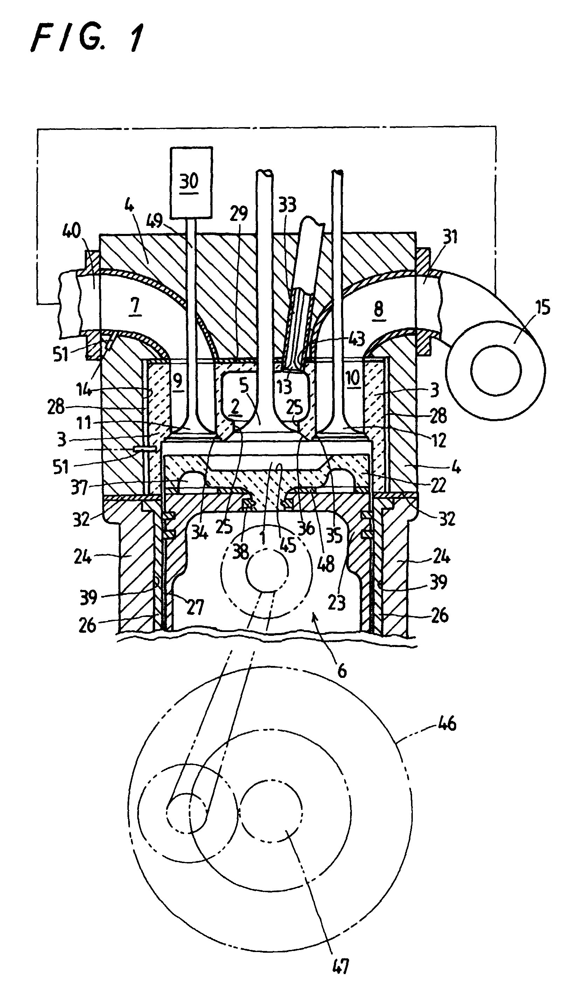

The gas-combustion engine, as shown in FIG. 1, has a power take-off shaft 47 such as a crankshaft, on which is provided a generator 46 for converting the torque to the electric power. The gas-combustion engine is in general comprised of a cylinder block 24 formed with cylinder bores 39, cylinders 27 of cylinder liners 26 fitted in the cylinder bores 39, a cylinder head 4 mounted to the cylinder block 24 through gaskets 32, combustion chamber members 3 arranged in cavities 14 formed in the cylinder head 4 through second gaskets 29, main combustion chambers 1 and sub-combustion chambers 2 formed in the combustion chamber members 3, and pistons 6 arranged in the cylinders 27 for reciprocating movement.

The pistons 6 are each composed of a piston crown 22 formed with a concave 45 that forms partly its associated main combustion chamber 1, and a piston wall 23 connected to the piston crown 22 through third gaskets 48 by means of a coupling ring 38 so as to form an insulating air plenum 37. For the single-cylinder type of the gas-combustion engine, both of an exhaust pipe 31 and an intake pipe 40 are directly connected to the cylinder head 4. On the other hand, for the multicylinder type of the gas-combustion engine, manifolds are used between the cylinder head 4 and both the exhaust pipes 40 and the intake pipes 31.

The gas-combustion engine of this invention primarily comprises the main combustion chambers 1 and sub-combustion chambers 2 formed in the combustion chamber members 3 and communicated with each other through communicating ports 25, intake ports 9 formed in the combustion chamber members 3 so as to open to the main combustion chambers 1, another intake ports 7 formed in the cylinder head 4 so as to communicate with the intake ports 9, exhaust ports 10 formed in the combustion chamber members 3 so as to open to the main combustion chambers 1, another exhaust ports 8 formed in the cylinder head 4 so as to communicate with the intake ports 10, intake valves 11 for opening and blocking the intake ports 9, exhaust valves 12 for opening and blocking the exhaust ports 10, control valves 5 seated against valve seats 36 so as to open and closed the communicating ports 25, fuel supply means for charging a compressed gas fuel into the sub-combustion chambers 2, a turbocharger 15 provide with the motor generator 18 and fluidly connected to the exhaust pipes 31 that are communicated with the exhaust ports 8, and intake-valve lift controllers 30 for shifting the timings for opening and closing the intake valves 11 in the intake ports 9.

The intake-valve lift controllers 30 each are to regulate the actuation of its associated intake valve 11 so as to vary the opening duration of the associated intake port 10, resulting in controlling the amount of intake air.

The fuel supply means are each comprised of a fuel supply line 33 formed in the cylinder head 4, a fuel ingress port 43 for opening the fuel supply line 33 to the associated sub-combustion chamber 2 and a fuel valve 13 for opening and closing the fuel ingress port 43. With the fuel valve 13 opening the fuel ingress port 43, the compressed natural gas may be charged through the fuel supply line 33 from a fuel source.

The combustion chamber members 3 each include therein the main combustion chamber 1, sub-combustion chamber 2, communicating port 25 between the sub- and main combustion chambers 1, 2, intake port 9 provided with a valve seat 34 against which is seated the intake valve 11, exhaust port 10 provided with a valve seat 35 against which is seated the exhaust valve 12, and the fuel ingress port 43 opened to the associated sub-combustion chamber 2.

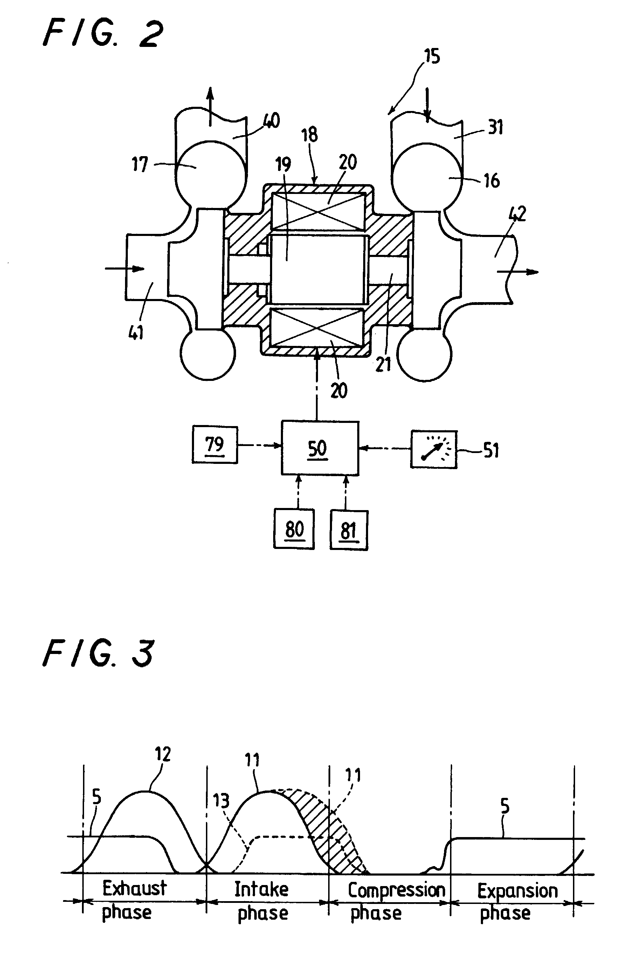

Arranged in the exhaust pipes 31 are a turbine 16 of the turbocharger 15 while the compressor 17 of the turbocharger 15 are connected to the intake pipes 40 so as to force the intake air into the intake pipes 40. The turbocharger 15, as shown in FIG. 2, each include a turbine 16 operated by the exhaust gases, a compressor 17 drivingly connected to the turbine 16 through a shaft 21 so as to be driven by the turbine 16, and a motor generator 18 arranged on the shaft 21. The compressor 17 driven by the turbine 16 intensifies the air in pressure and the resultant compressed air is fed into the main combustion chambers 1 through intake pipes 40 and intake ports 7, 9. The motor generator 18 is to recover the exhaust gas energy by converting the torque of the turbine 16 into the electric power that is stored in the electric power source such as batteries. The motor generator 18 is composed of a rotor 19 of permanent magnet secured on the shaft 21, and a stator 20 of coiled wire arranged around the rotor 19. To energize the motor generator 18 as the motor, the batteries or the generator 46 on the power take-off shaft may be used.

As apparent from FIG. 2, the gas-combustion engine further has temperature sensors 51 for monitoring temperatures of the combustion chamber walls in the sub- and main combustion chambers 1, 2, pressure sensors 78 for monitoring the boosting pressures in the intake air admitted in the sub- and main combustion chambers 1, 2 through the intake pipes 40 communicated to the intake ports 7, 9, an engine power sensor 80 for detecting power of the engine, and ignition sensors 81 for monitoring the ignition or burning of the fuel charged into the sub-combustion chambers 2. The gas-combustion engine in addition includes a controller unit 50 for dealing with the flow rates of fuel fed by the fuel supply means, operational conditions of the motor generator 18 of the turbocharger 15, and operating timings of the intake valves 11 actuated by the intake-valve lift controllers 30, in response to the detecting signals issued from the sensors 51, 79, 80, 81.

In the gas-combustion engine of the present invention, moreover, the intake-valve lift controllers 30 are actuated with commands from the controller unit 50, which are issued dependent on the temperature values detected by the temperature sensors 51 as to the intake air and the combustion chamber walls. The intake-valve lift controllers 30 thus actuated may cause the changes in the operating timings of the intake valves 11 at the intake ports 9, resulting in variation the actual compression ratios. The intake-valve lift controllers 30 are each mounted on the valve stem 49 of the associated intake valve 11 and actuated by solenoid-operated means in which the valve stem 49 is operated the electromagnetic force applied the valve stem, or hydraulically-operated means in which the valve stem 49 is driven by the hydraulic pressure regulated by a solenoid-operated valve. Adjusting the operating timing of the intake valve 11 controls the amount of intake air admitted into the associated main combustion chamber 1 and consequently the compression ratio may be determined dependently on the amount of intake air induced in the main combustion chamber 1. The gas-combustion engine thus makes it possible to keep the compression ratio within adequate range.

In the gas-combustion engine of the present invention, when the intake-valve lift controller 30 delays the timing for closure of the associated intake valve 11 at the intake port 9, the turbocharger 15 is controlled so as to increase the amount of intake air. In case where the gas-combustion engine operates at idling or low-load condition in which the combustion is unstable, the motor generator 18 equipped in the turbocharger 15 may operate as the motors to thereby increase the amount of intake air.

When the intake valves 11 is opened with the control valves 5 being left closed, the air from the compressor 17 of the turbocharger 15 may be admitted into the main combustion chambers 1 through the intake pipes 40 and the intake ports 7, 9 and compressed during the compression phase within the confines of the main combustion chambers because the control valves 5 are kept closed. In the meantime, the fuel of natural gas is injected into the sub-combustion chambers 2 from the fuel source through the natural gas supply lines 33 and fuel ingress ports 43. The combustion chamber members 3 for the sub- and main combustion chambers 1, 2 are made of ceramics such as $Si_3N_4$ and the like and each arranged within the associated cavity 14 in the cylinder head 4 through the gaskets 29 so as to provide a heat-insulating air space 28 confined in the cavity 14 so that the sub- and main combustion chambers 1, 2 are formed in heat-insulating structure.

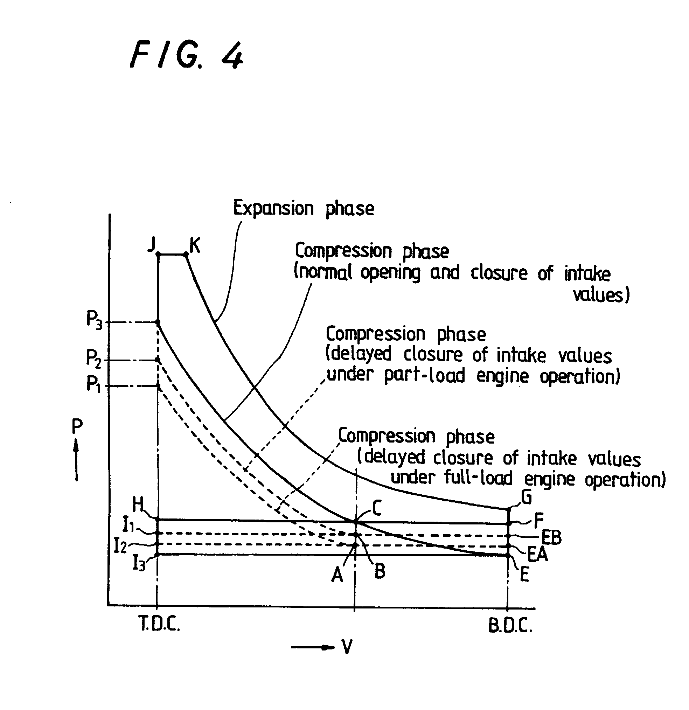

Next referring FIGS. 3 and 4, the following explains the operation of the gas-combustion engine according to the present invention.

The gas-combustion engine operates on the Miller cycle, wherein the phases of intake, compression, expansion and exhaust occur sequentially and the timings for opening and closure of the intake valves are altered so as to control the compression ratios to the adequate levels, as shown in FIG. 4.

As apparent from FIG. 3 showing an operating timing chart of an intake valve, exhaust valve, control valve and fuel valve in the gas-combustion engine according to the present invention, near the bottom dead center of the expansion phase, the exhaust valves 12 open the exhaust ports 10 while the control valves 5 open the communicating ports 25 so that the exhaust gases present in the sub- and main combustion chambers 1, 2 may be expelled through the exhaust ports 10, 8 and exhaust pipes 31 during the exhaust phase and then delivered into the turbine 16 of the turbocharger 15 arranged in the exhaust pipes 31. The exhaust gases are finally emitted out of the turbine discharge port 42. At this time, the fuel valves 13 are kept closed so that no fuel is injected into the sub-combustion chambers 2. With the turbine 16 of the turbocharger 15 being operated by the exhaust gases, the compressor 17 is driven by means of the associated shaft 21 so as to induce the air into the compressor 17 through air suction port 41. The compressed air is forced into the main combustion chambers 1 from the compressor 17 through the intake pipes 40 and the intake ports 7, 9. By rotating the shafts 21, moreover, the permanent-magnet rotors 19 on the shafts 21 make rotation thereby operating the motor generator 18 as the generator, by which is generated the electric power to be stored in the batteries or consumed in auxiliaries.

The gas-combustion engine of the present invention, especially, operates on the Miller cycle wherein the operating timings of the intake valves 11 are regulated by means of the intake-valve lift controllers 30. For example, when the temperatures of the intake air and/or the combustion chamber walls are below the preselected level of temperature, the intake-valve lift controllers 30, as shown in FIG. 4 and described with a solid line in FIG. 3, do not alter the timings for opening and closure of the intake valves 11, but keep the normal timings for opening and closure of the intake valves 11, thereby to close the intake valves 11 near the bottom dead center E of the compression phase.

In contrast, when the temperatures of the combustion chamber walls are above the preselected level of temperature, the timings for closure of the intake valves 11 are controlled, as shown in FIG. 4 and described with a broken line in FIG. 3, such that the closure timings of the intake valves 11 are delayed so as to block the intake ports 9 during a first half portion of the compression phase, resulting in making a part of intake air admitted into the main combustion chambers 1 flow backwards to the intake ports 9, 7. The temperatures of the intake air and the combustion chamber walls are monitored with temperature sensors 51. The signals as to the temperatures of the intake air and the combustion chamber walls are identified at the controller unit 50 whereby the intake-valve lift controllers 30 regulate the operating timings of the intake valves 11.

In case where the intake valves 11 are operated on the normal timing for opening and closure, the pressure in the main combustion chamber 1 rises during the compression phase along a characteristic curve of pressure versus volume, passing through the point C, and reaches the pressure P3 at the top dead center of the compression phase so that the compression ratio becomes higher. Subsequently, the intake valves 5 become open and the compressed hot air in the main combustion chambers 1 is charged into the sub-combustion chambers 2 in which the combustible mixture ignites or initiates the combustion with the pressure rise along the characteristic curve $P_3 \rightarrow J \rightarrow K$ of pressure versus volume due to the combustion. Following the combustion, the engine cycle shifts to the expansion phase $K \rightarrow G$ during which engine work is obtained on the pistons 6. As the pistons 6 descend on the expansion phase, the power take-off shaft 47 makes rotation to drive the generator 46 to thereby produce the electric power. Then, the exhaust valves 12 are turned open so that the cycle shifts to the bottom dead center F of the exhaust phase and further advances to the top dead center H of the exhaust phase F → H. Near the top dead center H of the expansion phase, the intake valves 11 release the intake ports 9 and the engine cycle advances to the top dead center $I_3$ of the intake phase. At the same time, the control valves 5 block the associated communicating ports 25 to thereby disconnect the sub-combustion chambers 2 from the main combustion chambers 1 that are supplied with intake air. Just after the control valves 5 have blocked the communicating ports 25, the fuel valves 13 open the fuel ingress ports 43 so that the fuel of natural gas is charged into the sub-combustion chambers 2 through the fuel supply lines 33. With the intake phase reaching the beginning E of the compression, or the bottom dead center of the intake phase, the pistons 6 start to move upwards so as to compress the intake air in the main combustion chambers 1 with the rise of pressure whereby the engine cycle may be recycled to operate the engine.

In addition, when the temperatures of the combustion chamber walls are above the preselected level of temperature under, for example, full-load engine operation, the timings for closure of the intake valves 11, as described with a broken line in FIG. 3 and shown in FIG. 4, are delayed to block the intake ports 9 during a first half portion of the compression phase, resulting in making a part of intake air admitted into the main combustion chambers 1 flow backwards to the intake ports 9, 7. In this event, because of the lack of the amount of intake air charged into the main combustion chambers 1, the turbocharger 15 operates to enhance the boosting pressure so as to shift the pressure at the top dead center of the intake phase from $I_3$ to $I_2$ and the pressure at the bottom dead center from E to EA. Consequently, the pressure in the main combustion chambers 1 does not rise during the compression phase till a transit point A at which the intake valves 11 block the intake ports 9. Thereafter, the pressure in the main combustion chambers 1 starts to rise along a broken curve of pressure versus volume characteristic, passing through the point A on the first half portion of the compression phase, and reaches the pressure $P_1$ at the top dead center TDC of the compression phase whereby the compression ratio of appreciate level is accomplished such that no combustion knock occurs and sufficient amount of intake air may be admitted.

In some cases where the temperatures of the combustion chamber walls are below the preselected level of temperature under, for example, part-load engine operation, the lifts of the intake valves 11 are made small within the shaded area shown in FIG. 3 and, thus, the timings for closure of the intake valves 11 are delayed so as to block the intake ports 9 within the range from the bottom dead center BDC of the compression phase to a first half portion (corresponding to the position at A-B) of the compression phase, resulting in making a part of intake air admitted into the main combustion chambers 1 flow backwards to the intake ports 9, 7. It will be thus understood that the pressure in the main combustion chambers 1 rises during the compression phase along a characteristic curve of pressure versus volume, passing through any point present in the range of from the point A to B, and reaches the pressure in the range of from $P_1$ to $P_2$ at the top dead center TDC of the compression phase so that the compression ratios are lowered.

When it is required to elevate the pressure at the end of the compression phase in the event of part-load engine operation, the compressor 17 of the turbocharger 15 is actuated to elevate the boosting pressure, that is, shift the top dead center of the intake phase from $I_3$ to $I_1$ and the bottom dead center of the compression phase from E to EB. During the compression phase, the characteristic curve of pressure versus volume reaches the point B with no pressure rise till the intake valves 11 block the intake ports 9. Thereafter, the pressure in the main combustion chambers 1 rises during the compression phase along a characteristic curve of pressure versus volume, passing through the point B, and reaches the pressure P2 at the top dead center TDC of the compression phase so that the ignition and combustion may take place fairly. On the other hand, under the idling or part-load operation of the engine in which the combustion is unstable and therefore it is very hard to enhance the boosting pressure, the motor generator 18 is actuated as the motor by the commands of the controller unit 50 to thereby increase the pressure of intake air.

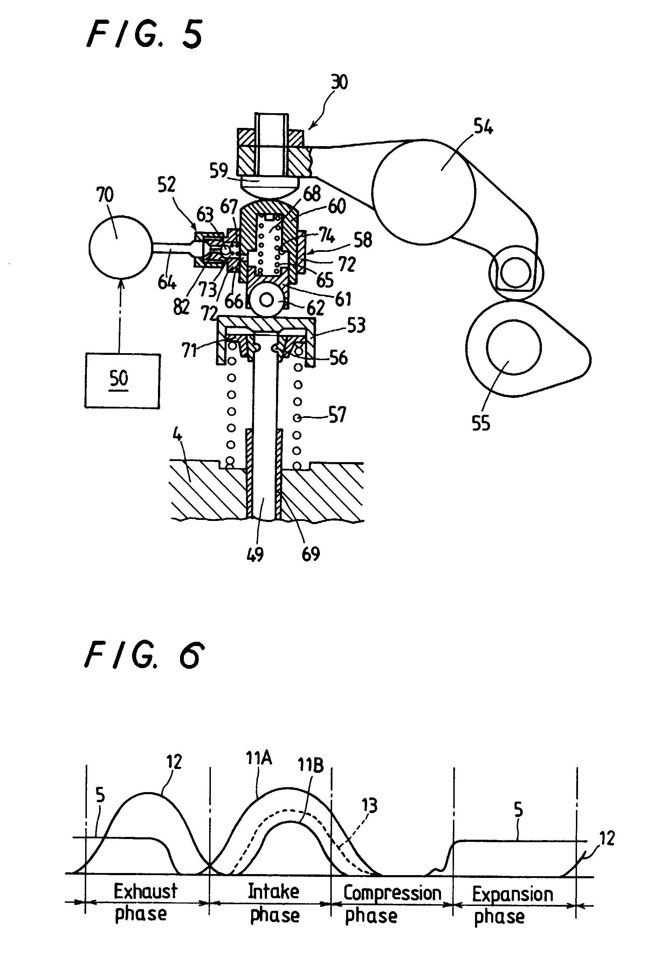

Further referring to FIGS. 5 and 6 showing another embodiment of the gas-combustion engine according to the present invention, this gas-combustion engine is constructed such that two intake ports 9 have the intake valves 11, one to each intake port, which are differed in the timing for opening thereof from each other by means of the intake-valve lift controller 30 that may be designed as shown in FIG. 5. This second embodiment of the gas-combustion engine operates normally with no actuation of the intake-valve lift controllers 30, whereas the intake-valve lift controllers 30 are made to operate during startup and warm-up of the engine to vary the opening duration of the intake valves 11 at the intake ports 9 thereby altering the amount of intake air.

In this type of the gas-combustion engine, the intake-valve lift controllers 30 operate so as to make the first and second intake valves 11, 11 differ mutually with each other in opening duration thereof, resulting in controlling the amount of intake air admitted in the main combustion chambers 1. The regulation of the timings for open and closure of the intake valves 11 results in controlling the amount of intake air induced in the main combustion chambers 1, by which may be determined the compression ratio. In the gas-combustion engine of this type, therefore, the compression ratio may be always kept at the appreciate level.

As shown in FIG. 6, the first intake valve 11 is an advance-open intake valve 11A having the opening duration that is operated on the prolonged lift duration, while the other intake valve 11 is a retard-open intake valve 11B having the opening duration that is operated on the lift duration shortened by the operation of the intake-valve lift controllers 30. For example, the advance-open intake valve 11A opens near the top dead center of the intake phase and closes at 20-40 deg. after the bottom dead center of the compression phase. The other retard-open intake valve 11B opens during from 40 deg. After the top dead center of the intake phase to 60-90 deg. before the bottom dead center of the intake phase and closes near the bottom dead center of the intake phase. The retard-open intake valve 11B may be controlled by the intake-valve lift controllers 30 of the type that has a cam follower running on a cam of a valve mechanism, or the type changing the contact position with a rocker arm 54 operated with a cam plate 55 as shown in FIG. 5.

In the gas-combustion engine of the second embodiment, the intake-valve lift controllers 30 regulate at least one of the first and second intake valves in accordance with the commands of the controller unit 50 in the following manner. During startup and warm-up just after the startup, any one of the intake valves 11 is regulated so as to have the lift duration that is made smaller than the prolonged lift duration, whereby the compression ratio is entirely rendered higher. Whereas upon the engine operation after the warm-up of the engine, the valve-open lift of the intake valve 11 is set back to the prolonged lift duration to thereby make the actual compression ratio smaller. In addition, when the intake-valve lift controllers 30 have made the valve-open lift duration of the intake valves 11 smaller, the turbocharger 15 is controlled so as to enhance the pressure of the intake air. On the other hand, under the idling or part-load operation of the engine in which the combustion is unstable and therefore it is very hard to enhance the boosting pressure by the operation of the turbocharger 15, the motor generator 18 provided in the turbocharger 15 is actuated as the motor to thereby increase the pressure of intake air. Moreover, the actuation of the motor generator 18 as the rotor may be carried out by the batteries or the generator 46 mounted on the engine power-take-off shaft 47.

The intake-valve lift controllers 30 are each composed of a hydraulic cylinder unit 58 that is expansible hydraulically and incorporated in the valve mechanism of the associated intake valve 11, and a hydraulic control unit 70 for regulating the hydraulic fluid supply in accordance with the commands of the controller unit 50. The intake valves 11 are each provided with a valve stem 49 that is movable along a valve stem guide 69 in a reciprocating manner. Arranged at the upper end of the valve stem 49 is a valve holder 53 and a valve spring seat 71 that is fixed to the upper end of the valve stem 49 with a cotter 56. A valve spring 57 for closure of the control valve 5 is arranged between the valve spring seat 71 and the upper surface of the cylinder head 4. The hydraulic cylinder units 58 are each disposed between the valve holder 53 on the valve stem 49 of the associated intake 11 and the an extremity 59 of the rocker arm 54 that runs on the cam plate 55 for oscillating movement. The extremity 59 of the rocker arm 54 comprises an adjuster nut and a bolt, the head of which is abutted against an upper cylinder half 60 of the hydraulic cylinder unit 58.

The hydraulic cylinder units 58 are each comprised of an upper cylinder half 60, a lower cylinder half 61 coupled with the upper half 60 so as to define a chamber 68 filled with fluid, a spring 65 contained in the fluid chamber 68, a roller 62 disposed between the lower cylinder half 61 and the valve holder 53, a fluid supply inlet 66 formed in the upper cylinder half 60, a cylinder holder 72 arranged around the upper cylinder half 60 and provided therein with a fluid supply chamber 73 to feed the fluid into the fluid chamber 68 through the fluid supply inlet 66, a non-return valve 63 and a return spring 67 contained in the fluid supply chamber 73, and a fluid supply line 64 for supplying the hydraulic fluid from the hydraulic control unit 70 to the fluid supply chamber 73 in the cylinder holder 72. The upper cylinder half 60 is provided on the inner periphery thereof with a stepped portion 74, against which may be abutted the open edge of the lower cylinder half 61. The non-return valve 63 arranged in the fluid supply chamber 73 are composed of, for example, the non-return valve element or ball 63, the spring 67 for biasing the ball 63 towards its closing position, and a solenoid-actuated needle stem 82 for forcing the ball 63 towards its open position against the elastic biasing force of the spring 67.

On the hydraulic cylinder unit 58 constructed as described just above, the hydraulic fluid is supplied into the fluid chamber 68 from the hydraulic control unit 70 through the fluid supply line 64, fluid supply chamber 73 and fluid supply inlet 66. With the non-return valve element 63 blocking the fluid supply line 64 so as to confine the filled fluid in the fluid chamber 68, the lower cylinder half 61 expands out of the upper cylinder half 60 so that the effective length of the upper and lower cylinder halves 60, 61 is made elongated whereby the lift of the associated intake valve may be made larger. In another event where the solenoid-actuated needle stem 82 acts on the ball 63, blocking the fluid supply line 64 from the hydraulic control unit 70, against the elastic biasing force of the spring 67 to thereby release the fluid supply line 64 through which the hydraulic fluid may thus be free to flow out of the fluid chamber 68, the downward motion of the extremity 59 of the rocker arm 54 depresses the upper cylinder half 60 so that the hydraulic fluid is expelled from the fluid chamber 68. As a result, the lower cylinder half 61 may spontaneously nested in the upper cylinder half 60 until the upper edge of the lower cylinder half 61 makes abutment with the stepped portion 74 of the upper cylinder half 60, where the effective length of the upper and lower cylinder halves 60, 61 is made shortest. At this condition, as the lower cylinder half 61 makes the lift of the associated intake valve 11 through the roller 62 and valve holder 53, the amount of lift of the intake valve 11 becomes smaller. Moreover, it will be understood that the effective length of the upper and lower cylinder halves 60, 61 may be controlled by the adjustment of the amount of hydraulic fluid fed in the fluid chamber 68 through the hydraulic control unit 70, resulting in controlling the amount of lift of the associated intake valve 11.

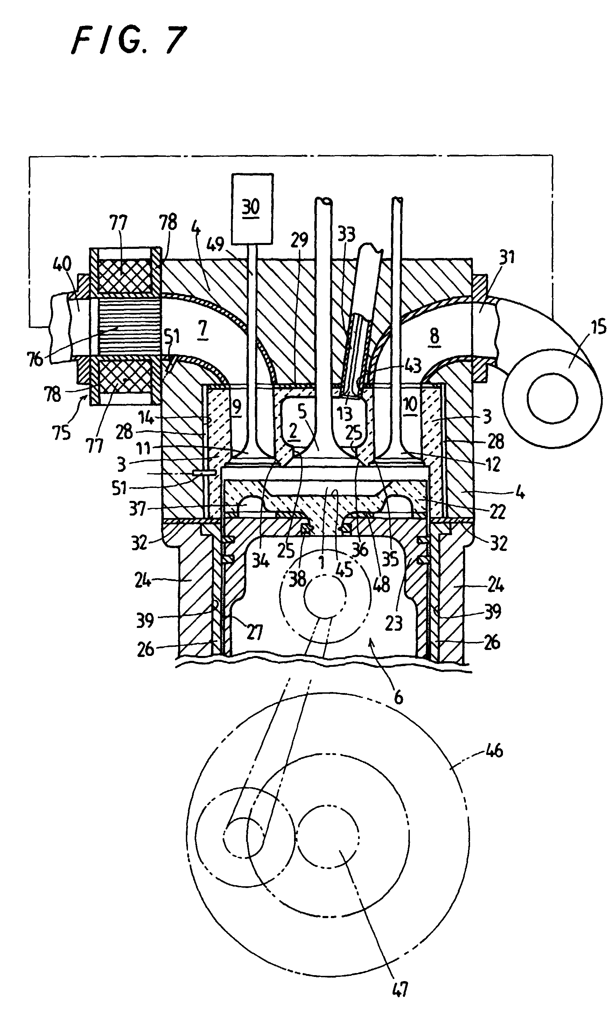

Next referring to FIGS. 7 to 9 in which a further another embodiment of the gas-combustion engine according to the present invention, the embodiment of the gas-combustion engine in FIG. 7 is substantially identical in structure with the gas-combustion engine shown in FIG. 1, except that heat exchangers 75 are disposed in the intake pipes, one to each pipe. To that extent, the components have been given the same reference characters, so that the previous description will be applicable.

The gas-combustion engine in FIG. 7 is provided with the heat exchangers 75 that are mounted around the intake pipes to cool down the intake air. The heat exchanger 75, for example, each comprises a porous member 76 of metals or ceramics arranged in the associated intake pipe 40 through which flows intake air, a casing 78 mounted around the intake pipe 40 and provided with cooling-air inlet and outlet, and another porous member 77 of metals or ceramics arranged in the casing 78.

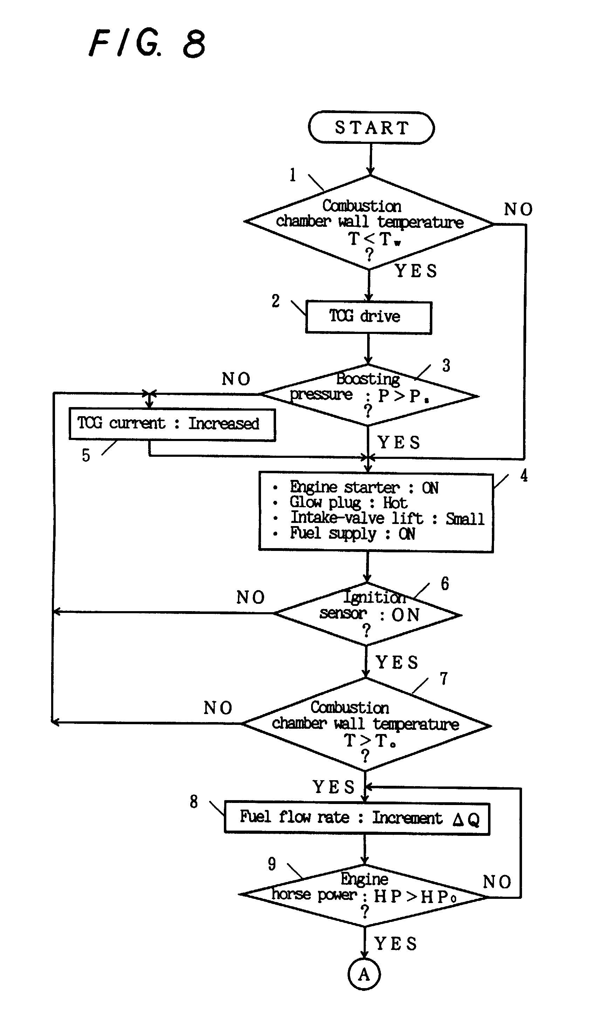

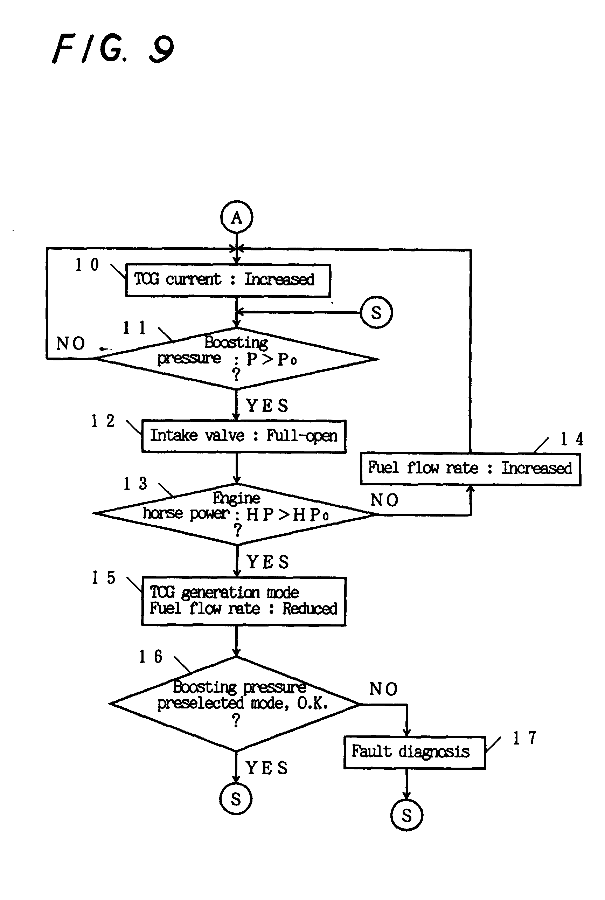

Operational control processing of the gas-combustion engine of the present invention will be explained hereinafter on reference to FIGS. 8 and 9.

Prior to starting the gas-combustion engine, the controller unit 50 identifies at the step 1 in FIG. 8 whether the combustion chamber wall temperature T monitored with the temperature sensor 51 is below the preselected value $T_w$. When the combustion chamber wall temperature T detected is below $T_w$, the intake-valve lift controller 30 regulates at the step 2 the intake valve 11 so as to advance the timing for closure of the intake valve 11 thereby blocking off the associated intake port 9 near the bottom dead center of the compression phase as shown in FIGS. 3 and 4. At the same time, the motor generator 18 of the turbocharger 15 is controlled so as to operate as the motor that intensifies the boosting pressure P in the intake air. In contrast, on the combustion chamber wall temperature T detected being above $T_w$, the processing should advance to the step 4. On the other hand, identified at the step 3 is whether the boosting pressure P elevated by the motor generator 18 and detected at the pressure sensor 79 is above the preselected value $P_s$. When the boosting pressure P is above $P_s$, the processing should advance to the step 4. In contrast, when the boosting pressure P is below $P_s$, the current applied to the motor generator 18 operating as the motor is increased at the step 5 to thereby further intensify the boosting pressure of the compressor 17.

In case where both the combustion chamber wall temperature T and the boosting pressure P are satisfactory, the engine is ready to ignite the natural gas fuel and, therefore, at the step 4 the engine starter is turned "on", the glow plug is energized for ignition, no intake-valve lift controller 30 operates and, therefore, the normal lift duration is set as shown in FIGS. 3 and 4, and further the fuel is ready to be supplied into the sub-combustion chamber 2 by the fuel supply means. Subsequently whether the ignition is reliably accomplished is identified at the step 6 by the ignition sensor 81 that monitors the vibration or the like. When detecting no existence of ignition in the sub-combustion chambers 2, the processing returns to the step 5 in which the motor generator 18 starts to operate as the motor to drive the compressor 17 of the turbocharger 15 thereby intensifying the boosting pressure P in the intake air. In contrast, when the fuel ignites in the sub-combustion chambers 2, identified at the step 7 is whether the combustion chamber wall temperature Y is above the design value To. When the combustion chamber wall temperature T is below $T_0$, the processing returns to the step 5 in which the motor generator 18 starts to operate as the motor to drive the compressor 17 of the turbocharger 15 thereby intensifying the boosting pressure P. With the combustion chamber wall temperature T rising over $T_0$, this indicates the warm-up operation is completed and therefore the motor generator 18 ceases operating as the motor. At the step 8, the amount Q of fuel applied from the fuel supply means is increased by an increment $\Delta Q$ to thereby enhance the engine horsepower HP.

Upon detecting the engine horsepower HP by the engine power sensor 81, the step 9 identifies whether the detected horsepower HP is over the preselected value $HP_0$ that is given by subtracting a small value $\Delta HP$ from a predetermined value. When the horsepower HP is below the preselected value $HP_0$, the processing returns to the step 8 wherein the amount Q of fuel applied from the fuel supply means is increased to thereby enhance the engine horsepower HP. In contrast, when the horsepower HP is above the preselected value $HP_0$, the motor generator 18 in the turbocharger 15 is controlled to operate as the generator, by which is generated the electric power to be stored in the batteries or consumed in auxiliaries. As an alternative, when horsepower HP is above the preselected value $HP_0$, the fuel supplied into the sub-combustion chambers 2 may be controlled so as to diminish in amount Q thereby making the horsepower HP approach the preselected value $HP_0$.

Upon the engine horsepower HP becoming stable, the intake-valve lift controllers 30 are prepared for reducing the compression ratio to thereby feed the sufficient amount of intake air into the sub-combustion chambers 2. In the gas-combustion engine of the present invention, when the temperatures of the combustion chamber walls are above the preselected level of temperature, the timings for closure of the intake valves 11 at the intake ports 7, 9 are controlled so as to be delayed, resulting in making a part of intake air flow backwards to the intake ports 9, 7 (refer to FIGS. 3 and 4). With the intake-valve lift controllers 30 having delayed the timings for closure of the intake valves 11 at the intake ports 9, the intake air is controlled so as to be intensified in pressure by means of the turbocharger 15. At the step 10, for example, the motor generator 18 in the turbocharger 15 is controlled so as to operate as the motor to drive the compressor 17 thereby intensifying the boosting pressure P. Identified in the next step 11 is whether the boosting pressure P is above the preselected value $P_0$. When the boosting pressure P is below the preselected value $P_0$, the processing returns to the previous step 10 and the motor generator 18 in the turbocharger 15 is again controlled so as to operate as the motor to drive the compressor 17 thereby further intensifying the boosting pressure P. In contrast, when the boosting pressure P is above the preselected value $P_0$, the intake-valve lift controllers 30 are made to operate, at the step 12, so as to control the associated intake valve 11 on the prolonged lift duration(refer to points A, B in FIG.4) whereby the intake valve 11 is kept open during a first half portion of the compression phase to flow backwards a part of the intake air to the intake ports 7, 9 with the reduction of the compression ratio.

At the step 13, subsequently, whether the engine horsepower HP detected by the power sensor 80 is above the preselected horsepower $HP_0$ is identified. When the engine horsepower HP is below the preselected horsepower $HP_0$, the flow rate Q of fuel into the sub-combustion chambers 2 is made increased at the step 14 and then the processing returns to the step 10 so as to repeat the steps as described just above. On the contrary, when the engine horsepower HP is above the preselected horsepower $HP_0$, the motor generator 18 in the turbocharger 15 is controlled to operate as the generator, by which is generated the electric power to be stored in the batteries or consumed in auxiliaries. As an alternative, when horsepower HP is above the preselected value $HP_0$, the fuel supplied into the sub-combustion chambers 2 may be controlled, at the step 15, so as to diminish in amount Q thereby making the horsepower HP approach the preselected value $HP_0$. At the step 16, identifying whether the engine is operated on the design cycle mode preselected previously and whether the engine is operated normally with the design boosting pressure predetermined previously. When the engine is operated on normal conditions, the processing returns the step 11 so as to repeat the steps as described just above. In contrast, when the engine operation is under the abnormal situation, the processing advances to the fault diagnosis at the step 17. After locating and recover from the failures, the processing returns to the step 11 so as to repeat the steps as described above.

While the present invention has been described in its preferred embodiments, it is to be understood that the words which have been used are words of description rather than limitation and that changes within the purview of the appended claims may be made without departing from the true scope of the invention in its broader aspects.

## Claims

1. A gas-combustion engine comprising combustion chamber members arranged in a cylinder head(4) and provided with main combustion chambers(1) and sub-combustion chambers(2) that are communicated with the main combustion chambers(1) through communicating ports (25), intake ports(7,9) and exhaust ports(8,10) formed in the combustion chamber members(3) and the cylinder head(4) so as to open to the main combustion chambers (1), intake valves(11) for opening and closing the intake ports(7,9), exhaust valves(12) for opening and closing the exhaust ports(8,10), control valves(5) disposed at the communicating ports(25) to open and close the communicating ports(25), fuel supply means for charging compressed natural gas into the sub-combustion chambers(2), a turbocharger (15) provided with a motor generator(18) that is arranged in exhaust pipes connected to the exhaust ports(8,10), and intake-valve lift controllers(30) each for altering a timing for opening and closure of its associated intake valve (11) at the associated intake port(7,9), whereby the intake-valve lift controllers(30) each alter the timing for closure of its associated intake valve(11) to thereby vary actual compression ratios while the motor generator(18) operates to actuate the turbocharger(15) so as to control boosting pressures of intake air.

2. The gas-combustion engine constructed as defined in claim 1, wherein when a temperature of any one of the intake air and combustion chamber walls is below a preselected level of temperature, the intake-valve lift controllers(30) each control its associated intake valve(11) at the associated intake port (7,9) so as to advance the timing for closure of the intake valve(11) to thereby block the intake port(7,9) near the bottom dead center of the compression phase, and when the temperature of the combustion chamber walls is above the preselected level of temperature, the timing for closure of the intake valve(11) at the intake port (7,9) is controlled so as to be delayed to thereby permit a part of the intake air to flow backwards to the intake port(7,9).

3. The gas-combustion engine constructed as defined in claim 2, wherein when the intake-valve lift controllers(30) have delayed the timing for closure of the intake valves(11) at the intake ports(7,9), the motor generator(18) is controlled so as to be energized to thereby operate the turbocharger(15) that intensifies the boosting pressure.

4. The gas-combustion engine constructed as defined in claim 3, wherein on part-load engine operation during which combustion is unstable, the motor generator(18) provided in the turbocharger(15) is controlled so as to operate as the motor for enhancing the boosting pressure.

5. The gas-combustion engine constructed as defined in claim 1, wherein the motor generator(18) is composed of a rotor(19) of permanent magnet mounted on a shaft(21) of the turbocharger(15), and a stator (20) arranged confronting the rotor(19).

6. The gas-combustion engine constructed as defined in claim 1, wherein the motor generator(18) operates as the motor on any one of batteries and a generator(46) that is mounted on an engine power-take-off shaft (47).

7. The gas-combustion engine constructed as defined in claim 1, wherein the combustion chamber members(3) are each formed with the main combustion chamber(1), the sub-combustion chamber(2), the communicating port(25) for opening the main combustion chamber(1) to the sub-combustion chamber(2), the intake port(7,9) provided with a valve seat(34) against which is seated the intake valve (11), the exhaust port(8,10) provided with a valve seat(35) against which is seated the exhaust valve (12), and a fuel ingress port(43) opened to the sub-combustion chamber(2) to charge the compressed natural gas into the sub-combustion chamber (2).

8. The gas-combustion engine constructed as defined in claim 1, wherein the combustion chamber members(3) are made of ceramics and covered with heat-insulating layers(28) so as to be formed in heat-insulating structures.

9. The gas-combustion engine constructed as defined in claim 1, wherein the combustion chamber members(3) are each formed with two intake ports(7,9) in which are provided the intake valves(11) for opening and blocking the intake ports(7,9), one to each port, and the intake valve lift controllers(30) each alter a duration for opening at least one of its associated two intake ports(7,9) to thereby vary the amount of intake air.

10. The gas-combustion engine constructed as defined in claim 9, wherein the intake-valve lift controllers (30) each operate so as to make the duration for opening any one of its associated two intake valves (11) differ from that of the other intake valve(11), thereby controlling the amount of intake air admitted in the associated main combustion chamber(1).

11. The gas-combustion engine constructed as defined in claim 9, wherein during startup and warm-up just after the startup of the engine, the intake valves (11) are controlled so as to make their valve-open lifts smaller compared with their normal lifts to thereby elevate compression ratios, and after the engine warm-up operation the intake valve lift controllers (30) are controlled so as to return the shortened valve-open lifts to the normal lifts to thereby diminish actual compression ratios.

12. The gas-combustion engine constructed as defined in claim 11, wherein when the intake valve lift controllers(30) have returned the shortened valve-open lifts to the normal lifts, the turbocharger(15) is controlled so as to intensify the boosting pressure.

13. The gas-combustion engine constructed as defined in claim 12, wherein on part-load engine operation during which combustion is unstable, the motor generator(18) provided in the turbocharger(15) is controlled so as to operate as the motor for enhancing the boosting pressure.

14. The gas-combustion engine constructed as defined in claim 9, wherein the intake-valve lift controllers (30) are each comprised of a hydraulic cylinder unit (58) expansible in response to ingression and egression of hydraulic fluid to a fluid chamber(68) that is incorporated in a valve mechanism of the associated intake valve(11), and the hydraulic cylinder is regulated in hydraulic pressure therein to thereby control the lift of the intake valve(11).

15. The gas-combustion engine constructed as defined in claim 14, wherein the hydraulic cylinder units(58) are each disposed between a valve holder(53) mounted to a valve stem(49) of the associated intake valve(11) and any one of a cam(55) and a rocker arm(54) oscillated by the cam(55).

16. The gas-combustion engine constructed as defined in claim 1, including temperature sensors(51) for monitoring temperatures of the combustion chamber walls of the combustion chambers(1,2), pressure sensors (79) monitoring the boosting pressures in intake air admitted into the combustion chambers(1,2) through intake pipes(40) connected to the intake ports(7,9), other sensors(51,79,81) for monitoring engine power and ignition of the fuel charged into the sub-combustion chambers(2), and a controller unit(50) for regulating, in response to detected signals issued from the sensors, fuel flow rates supplied by the fuel supply means, the boosting pressures undergoing changes in accordance with the operating conditions of the motor generator (18) of the turbocharger(15), and the timing for opening and closure of the intake valves(11) through the intake-valve lift controllers(30).

17. The gas-combustion engine constructed as defined in claim 16, wherein the controller unit(50), when the boosting pressure is below a preselected value, controls the motor generator(18) so as to operate as the motor thereby enhancing the boosting pressure.

18. The gas-combustion engine constructed as defined in claim 16, wherein the controller unit(50), when the temperature of the combustion chamber walls is below a preselected value, controls the motor generator (18) so as to operate as the motor thereby enhancing the boosting pressure.

19. The gas-combustion engine constructed as defined in claim 16, wherein the controller unit(50), when the engine power is below a preselected value, controls so as to increase the fuel flow rates supplied from the fuel supply means.

20. The gas-combustion engine constructed as defined in claim 16, wherein the controller unit(50), when the engine power is above a preselected value, controls the motor generator(18) so as to operate as the generator(18) thereby generating electric power.

21. The gas-combustion engine constructed as defined in claim 16, wherein the controller unit(50), when ignition failure is detected, controls the motor generator (18) so as to operate as the motor thereby enhancing the boosting pressure.

22. The gas-combustion engine constructed as defined in claim 16, wherein the intake-valve lift controllers (30) each, when the temperature of the combustion chamber walls is below a design temperature preselected, advance the timing for closure of the associated intake valve(11) so as to block the associated intake port(7,9) near the bottom dead center of the compression phase, and when the temperature of the combustion chamber walls is above the design temperature preselected, delay the timing for closure of the intake valve(11) at the intake port (7,9) so as to permit a part of the intake air to flow backwards to the intake port(7,9).

23. The gas-combustion engine constructed as defined in claim 22, wherein when the intake-valve lift controllers(30) have delayed the timing for closure of the intake valves(11) at the intake ports(7,9), the turbocharger(15) is controlled so as to intensify the pressures in the intake air.

24. The gas-combustion engine constructed as defined in claim 16, wherein the intake pipes are each provided with a heat exchanger(75) for cooling the intake air.

## FIG. 1

## FIG. 2

## FIG. 3

| Exhaust phase | Intake phase | Compression phase | Expansion phase |

# FIG. 4

Expansion phase

Compression phase
(normal opening and closure of intake values)

Compression phase
(delayed closure of intake values under part-load engine operation)

Compression phase
(delayed closure of intake values under full-load engine operation)

P

$P_3$, $P_2$, $P_1$

J, K, H, $I_1$, $I_2$, $I_3$, A, B, C, G, F, EB, EA, E

T.D.C.

B.D.C.

V

# FIG. 5

# FIG. 6

| Exhaust phase | Intake phase | Compression phase | Expansion phase |
|---|---|---|---|

# FIG. 7

## F I G. 8

```
                    ( S T A R T )
                          │
                          ▼
  1                ╱─────────────╲
              ╱  Combustion       ╲        N O
             ╱ chamber wall temperature╲──────────┐
              ╲      T < T_w      ╱                │
                ╲      ?        ╱                  │
                  ╲───────────╱                    │
                       │ Y E S                     │
                       ▼                           │
  2            ┌──────────────┐                    │
               │   TCG drive  │                    │
               └──────────────┘                    │
                       │                           │
                       ▼                           │
        N O    ╱─────────────╲    3                │
       ┌──────╱   Boosting    ╲                    │
       │      ╲ pressure : P > P_o╱                │
       │        ╲      ?       ╱                   │
       │          ╲──────────╱                     │
       │               │ Y E S                     │
       ▼               │                           │
┌──────────────────┐   │                           │
│TCG current : Increased│  │                        │
└──────────────────┘   │                           │
  5    │               ▼                           │
       └──────────────►├◄──────────────────────────┘
                       ▼
  4            ┌──────────────────────────┐
               │ • Engine starter : ON    │
               │ • Glow plug : Hot        │
               │ • Intake-valve lift : Small│
               │ • Fuel supply : ON       │
               └──────────────────────────┘
                       │
                       ▼
        N O    ╱─────────────╲   6
      ◄───────╱   Ignition    ╲
              ╲  sensor : ON   ╱
                ╲      ?      ╱
                  ╲────────╱
                       │ Y E S
                       ▼
        N O    ╱─────────────╲   7
      ◄───────╱  Combustion   ╲
              ╲ chamber wall temperature╲
              ╲      T > T_o   ╱
                ╲      ?      ╱
                  ╲────────╱
                       │ Y E S
                       ▼
  8            ┌──────────────────────────┐
               │Fuel flow rate : Increment ΔQ│◄─┐
               └──────────────────────────┘   │
                       │                       │
                       ▼                       │
  9            ╱─────────────╲                 │
              ╱    Engine      ╲      N O       │
              ╲ horse power : HP > HP_o╱────────┘
                ╲      ?      ╱
                  ╲────────╱
                       │ Y E S
                       ▼
                      ( A )
```

# F/G. 9

```
                        (A)

    10      TCG current : Increased

                                              (S)

    NO      11      Boosting
                  pressure : P > P₀
                       ?

                       YES

    12      Intake valve : Full-open
                                              14
                                         Fuel flow rate : Increased
    13          Engine                        NO
          horse power : HP > HP₀
                  ?

                       YES

    15      TCG generation mode
            Fuel flow rate : Reduced

    16      Boosting pressure      NO
          preselected mode, O.K.
                  ?                          Fault diagnosis    17

                       YES
                       (S)                        (S)
```

$P > P_0$

$HP > HP_0$

21